# EUROPEAN PATENT APPLICATION

(11) **EP 1 116 734 A1**
(43) Date of publication of application: **18.07.2001**
(21) Application number: 00200080.0
(22) Date of filing: 10.01.2000
(51) Int. Cl.: C08F 299/00, C09D 133/14, C09D 167/07, C08F 8/14

(54) **Radiation-curable composition**

(71) Applicant: DSM N.V., 6411 TE Heerlen (NL)
(72) Inventor: Van Hout, Johannes Barend, 8131 ST Wijhe (NL); Van Benthem, Rudolfus Antonius Theodorus Maria, 6141 BR Sittard (NL); Jansen, Johann Franz Gradus Antonius, 6165 AP Geleen (NL); Dias, Aylvin Jorge Angelo Athanasius, 6221 JD Maastricht (NL)

(57) **Abstract**

The invention is directed to a waterbased radiation curable composition comprising a compound having at least one group derived from a carboxylic ester of a hydroxyalkylamide with an α, β-ethylenically unsaturated carboxylic acid and water. The molecular weight (Mw) of the compound is higher than 1000. The composition also can comprise stabiliser groups. The compositions according to the invention can be applied in the technical fields of coatings, inks and adhesives.

## Description

The invention relates to a radiation-curable binder composition. The invention also relates to a radiation curable coating composition comprising the binder composition.

Radiation curable coating compositions may be cured with UV or EB radiation. In case of UV-radiation at least an ultraviolet sensitizer and/or a photoinitiator for the crosslinking is necessary. The free radicals are rapidly initiated and propagated within the system upon exposure to ultraviolet light. Generally, a waterdilutable or a waterdispersable radiation-curable compositions needs two drying steps. The first step is a physical drying step being the evaporation of the water and the second step is a chemical drying step being the radiation curing. A problem for this kind of systems is that after the evaporation of the water and before the radiation curing the films are still wet or tacky. To overcome this problem often polymers having a high molecular weight and/or high glass transition temperature (Tg) are added. However this also results in a higher WPU (weight per unsaturation) and consequently in a chemical drying step which has to be improved. Furthermore it is difficult to emulsify these resins in water.

It is the object of the present invention to provide a waterbased composition having physical drying properties and having good chemical drying properties.

The composition according to the invention comprises :
a) a compound having at least one group derived from a carboxylic ester of a hydroxyalkylamide with an α,β-ethylenically unsaturated carboxylic acid and
b) water.

This watersoluble composition comprising the compound with ester amide units and water results in good physical drying properties and in good chemical properties. Another advantage is that the emulsification process in the presence of this composition can be carried out more easier due to the specific three dimensional structure of the polymer. The compound can be easily dispersed and/or solubilised in water due to the three dimensional structure.

According to a preferred embodiment of the invention the compound a) has a molecular weight (Mw) higher than 1000 and less than 50000.

According to another preferred embodiment of the invention the molecular weight ranges between 1000 and 25000 and more preferably between 1500 and 25000.

According to a further preferred embodiment of the invention the compound a) is a functionalized compound according to formula (I) : 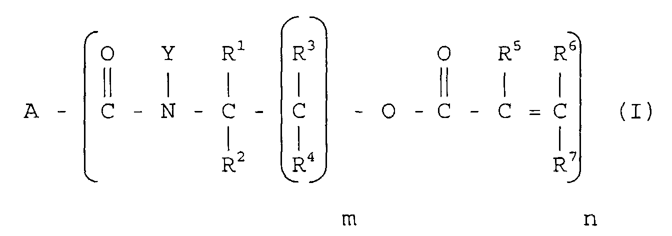 where:
A = monovalent or polyvalent organic group which is derived from a saturated or an unsaturated (C₁-C₆₀) alkyl group, or derived from an (C₆-C₁₀) aryl group or a polymer P,
Y = hydrogen, an (C₁-C₈) alkyl group or a group of the formula 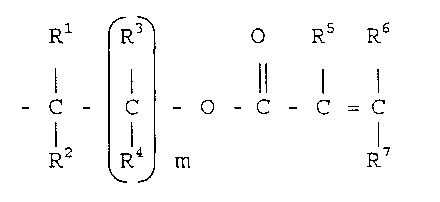
R¹, R², R³, R⁴ are, identical or different,
hydrogen or a lineair, branched or cyclic (C₁-C₈) alkyl chain,
R⁵ = hydrogen, (C₁-C₅)alkyl, -CH₂OH or CH₂COOX,
R⁶,R⁷ = hydrogen, (C₁-C₈) alkyl, or COOX
X = hydrogen or (C₁-C₈) alkyl,
n = 2-1000 and
m = 1-4.

Regarding formula (I) the organic groups in A may furthermore be substituted with, for example, ethers, esters, hydroxyl, amides, urethanes, acids, amines, urea or ketones.

In formula (I) R¹, R² or R³ may form part of a cycloalkyl group.

Preferably, Y is hydrogen or methyl.

More preferably, Y is hydrogen.

Preferably, R¹, R², R³ and R⁴ are hydrogen or methyl.

More preferably R¹, R² and R³ are hydrogen.

R⁵ is preferably hydrogen or (m)ethyl.

R⁶ and R⁷ are preferably hydrogen.

Preferably n = 2-100, more preferably n = 2-20.

Preferably m = 1-2, more preferably m = 1.

Suitable hydroxyl amides are for example β-hydroxy alkylamide, γ-hydroxy alkylamide, δ-hydroxy alkyl amide and ε-hydroxy alkyl amide.

Preferably, the hydroxylamide is β-hydroxy alkylamide.

Suitable polymers P are, for example, addition polymers and condensation polymers having a molecular weight (Mw) of at least 400.

These polymers can be, for example, linear polymers, branched polymers, comb polymers, star polymers, ladder polymers, dendrimers and hyperbranched polymers.

Suitable addition polymers P include polymers derived from monomers such as for example (meth)acrylate, acrylamide, maleic acid, cyanoacrylate, vinylacetate, vinyl ether, vinylsilane and mixtures thereof.

Suitable condensation polymers P include, for example, polyesters, polylactones, polyamides, polyesteramides, polyethers, polyesterethers, polyurethanes and polyurethane-urea.

Suitable linear polymers P include, for example, polyethers derived from diols, polyethylene, poly-MMA, polyesters derived from diols and difunctional acids and/or mono-hydroxy acids.

Suitable branched polymers P include, for example, polyethers comprising at least one tri functional alcohol unit, polyesters comprising at least one tri- or tetra functional alcohol unit and/or one tri/tetra-functional acid unit.

Suitable dendrimers are disclosed in for example EP-A-575596, EP-A-707611, EP-A-741756, EP-A-672703, Angew. Chem. Int. Ed. Eng. 1994, 33, 2413, Angew. Chem. Int Ed. Eng. 1990, 29, 138, Angew. Chem. Int. Ed. Eng. 1993, 32, 1308 and Angew. Chem. Int. Ed. Eng. 1992, 31, 1200.

Suitable hyperbranched polymers include, for example, condensation polymers containing β-hydroxyalkylamide groups and having a weight average molecular mass of > 1000 g/mol.

The polymers can comprise at least two groups according to formula (II): 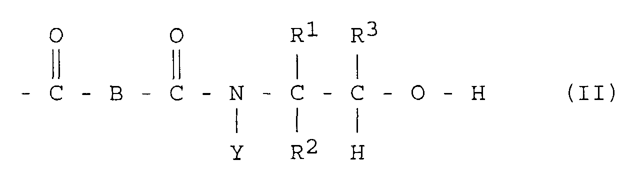 in which 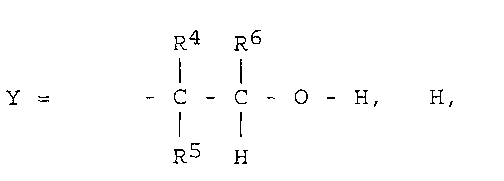
(C₁-C₂₀) (cyclo)alkyl or (C₆-C₁₀) aryl,
B = (C₂-C₂₀), optionally substituted, aryl or
(cyclo)alkyl aliphatic diradical, and
R¹, R², R³, R⁴, R⁵ and R⁶ may, independently of one another, be the same or different, H, (C₆-C₁₀) aryl or (C₁-C₈) (cyclo)alkyl radical.

B can be selected from, for example, (C₁-C₂₆)alkyl)1,2-ethylene, (methyl-)1,2 ethylidene, 1,3-propylene,(methyl-)1,2-cyclohexyl,(methyl-)1,2-phenylene, 1,3-phenylene,1,4-phenylene, 2,3-norbornyl, 2,3-norbornen-5-yl or (methyl-)1,2 cyclohex-4-enyl radical.
More preferably the polymer contains at least two groups according to formula (II): 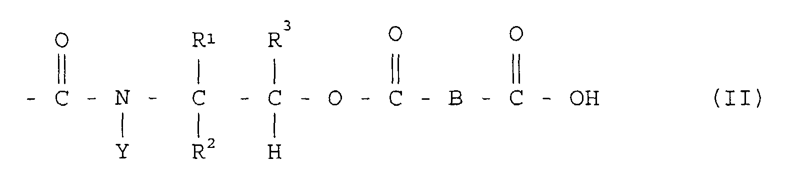 in which 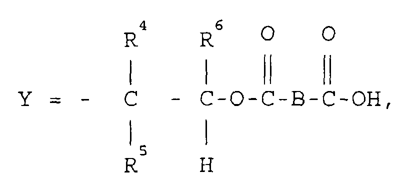
H, (C₁-C₂₀) (cyclo)alkyl,
or (C₆-C₁₀) aryl,
B = (C₂-C₂₄), optionally substituted, aryl or
(cyclo)alkyl aliphatic diradical, and
R¹, R², R³, R⁴, R⁵ and R⁶ may, independently of one another, be the same or different, H, (C₆-C₁₀) aryl or (C₁-C₈) (cyclo)alkyl radical.

The polymer containing hydroxyalkylamide groups may also be a polymer according to formula (III) : 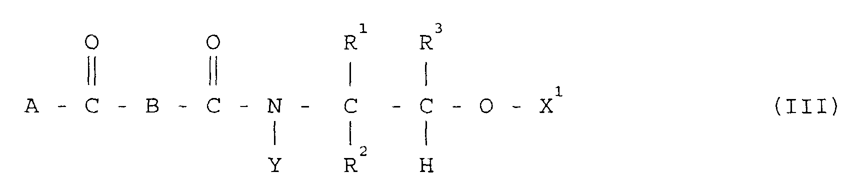 in which: 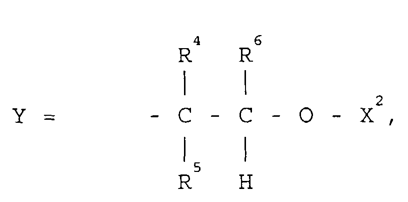
H, (C₁-C₂₀)(cyclo)alkyl or
(C₆-C₁₀)aryl 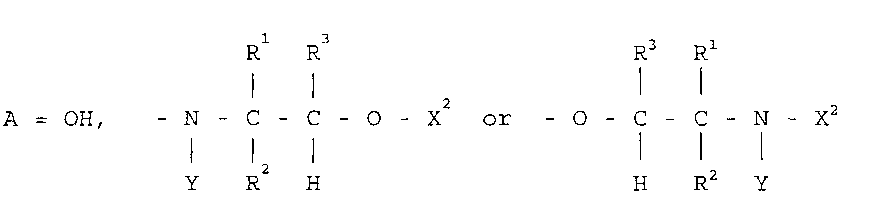
B = (C₂-C₂₄), optionally substituted, aryl or (cyclo)alkyl aliphatic diradical, 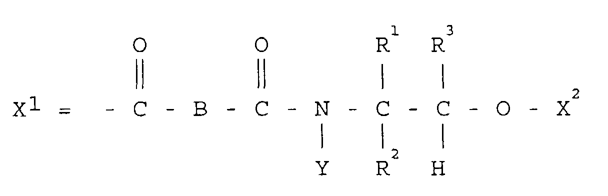 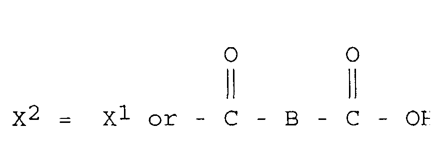 and
R¹, R², R³, R⁴, R⁵ and R⁶ may, independently of one another, be the same or different, H, (C₆-C₁₀) aryl or (C₁-C₈) (cyclo)alkyl radical or CH₂-OX².

In formulas (I), (II) and (III) R groups may together or with neighbouring carbon atoms form part of a cycloalkyl group.

According to another preferred embodiment of the invention, the polymer containing β-

Other examples of suitable hyperbranched polymers are disclosed in WO-A-9612754, WO-A-9613558, WO-A-9619537 and WO-A-9317060.

Between P and the functional group a connecting group S can be present:

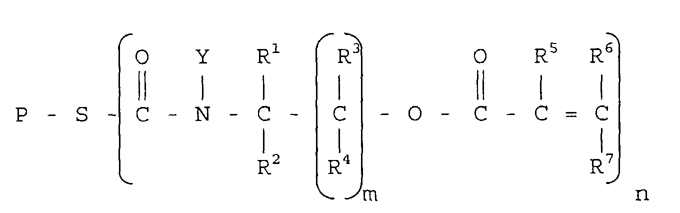

A suitable group S includes, for example, an alkyl, oxyalkyl, urethanealkyl, ureaalkyl carboxyalkyl, aminoalkyl or amidoalkyl group.

The functionalised compound according to formula (I) can be obtained, for instance, by an esterification reaction between a hydroxyalkylamide units containing polymer and an unsaturated carboxylic acid, at a temperature between, for example, 80°C and 140°C.

The hydroxyalkylamide unit can be in the chain, in a side-chain or at the end of the polymer.

Preferably, 1 - 1.5 mol of acid are used per mole of hydroxide.

Preferably, the reaction takes place in the presence of an organic solvent, such as, for example, xylene, toluene or tetrahydrofuran.

Preferably, the reaction takes place in the presence of a stabilizing compound which prevents polymerization of the unsaturated ester groups under the conditions used for effecting this reaction. The stabilising compound or a mixture of stabilising compounds is generally used in amounts between about 50 and about 2000 ppm and preferably between 75 and 1000 ppm. They can be used in aerobic or anaerobic conditions depending on the stabilising compound.

Suitable stabilizing compounds include, for example, hydroquinone, monomethylhydroquinone, anthraquinone, β-nitrostyrene, phenothiazine and 2,6-di-tert-butyl-4-methyl-phenol (BHT).

The esterification reaction may take place in the presence of a catalyst. Suitable catalysts include strong acids, for example, sulphur-containing organic acids like alkane sulphonic acids and methane sulphonic acid.

Suitable unsaturated carboxylic acids include, for example, (meth)acrylic acid and derivatives, crotonic acid, (semi-ester of) itaconic acid, maleic acid, citraconic acid, mesaconic acid and fumaric acid. Preferably (meth)acrylic acid is applied.

The functionalised polymer can also be obtained by the reaction between a hydroxyalkyl amide and an unsaturated carboxylic acid chloride, anhydride or ester or a reaction between an oxazoline containing polymer and an unsaturated carboxylic acid.

The reaction between the amide and the unsaturated chloride or anhydride preferably takes place at temperature between 0°C and 30°C in a solvent in the presence of a base. Suitable solvents include, for example, tetrahydrofuran, water, dichloromethane or diethylether. Suitable bases include, for example, pyridine or triethylamine.

Suitable chlorides, anhydrides or esters include the chlorides, anhydrides and esters of the in the foregoing mentioned carboxylic acid.

The reaction between the amide and the unsaturated ester, preferably, takes place at temperatures between 80°C and 140°C in the presence of a Lewis acid.

Preferably, an excess of the unsaturated ester is applied. The ester functions both as solvent and as reactant.

Suitable Lewis acids are, for example, tetra alkyl titanate and sulphuric acid.

Suitable unsaturated carboxylic acids include, for example, (meth)acrylic acid and derivatives, crotonic acid, (semi-ester of) itaconic acid, maleic acid, citraconic acid, mesaconic acid and fumaric acid. Preferably, methacrylic acid and acrylic acid are used.

The radiation curable binder composition according to the invention may also be applied in a waterdilutable composition or a waterdispersable composition. The colloidal stability of these compositions can be obtained , for example, by the use of a surfactant or by modification of a polymer according to formula (I) or (II) to give surface active groups.

The waterdispersable composition according to the invention comprises
a) the compound a) as described in the foregoing
b) water and
c) at least one surfactant and/or stabiliser.

The surfactant(s) c) may be added to the composition as an external stabiliser and/or may be built-in as a stabiliser in the compound a) by a modified polymer.

Suitable examples of external surfactants include anionic, cationic and nonionic surfactants.

Examples are alkyl carboxylic acids salts, alkyl sulfate salts, alkyl sulfonate salts, alkyl phosphate salts, alkyl sulfo succinate salts, oligomeric and/or polymeric carboxylic acid salts, alkyl aryl polyether sulfate salts and ammonium salts. Suitable emulsifying agents include soaps, alkylbenzenesulphonates, for example sodium dodecylbenzene sulfonate, alkyl phenoxy polyethylene sulfonates, sodium lauryl sulfate, salts of long chain amines, salts of long-chain carboxylic and sulfonic acids. Emulsifying agents for example those having multifunctional carboxyl-polyether adducts, oligomeric carboxylic acid salts, the alkyl aryl ether alcohols and alkyl aryl polyether sulfate salts can also be applied.

The weight amount of the surfactant may be between 1 and 15 % and preferably between 2 and 5 % relative to compound a).

According to another preferred embodiment of the invention the stabilising groups are built-in in compound a) .

The surface-active groups can be anionic, for example, acid groups, cationic for example, amine groups and nonionic groups, for example, polyethylene oxide.

A compound a) having the anionic stabilising component built in can be represented , for example, by formula (IV) 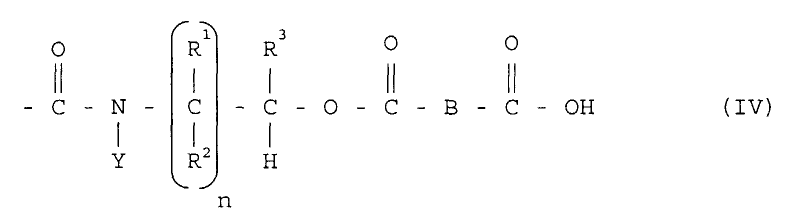 in which 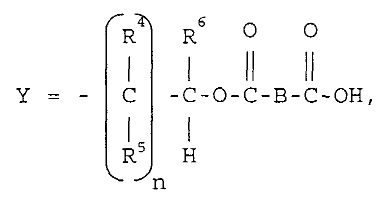
H, (C₁-C₂₀) (cyclo)alkyl,
or (C₆-C₁₀) aryl,
B = (C₂-C₂₄), optionally substituted, aryl or (cyclo)alkyl aliphatic diradical,
R¹, R², R³, R⁴, R⁵ and R⁶ may, independently of one another, be the same or different, H, (C₆-C₁₀) aryl or (C₁-C₈) (cyclo)alkyl radical and
n = 1-4.

The stabilising component can also be incorporated in an anionic compound a) according to formula (V) 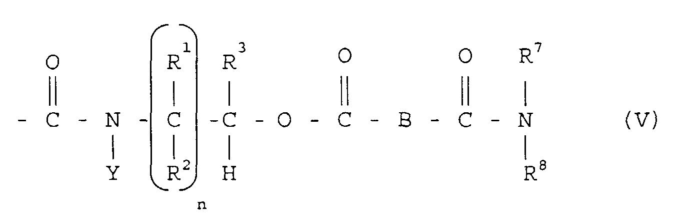 in which 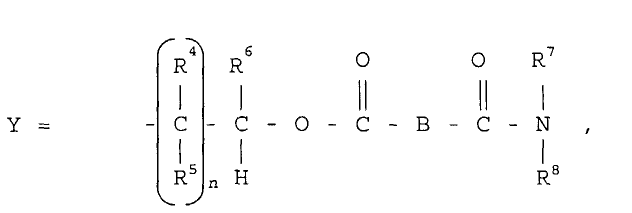
H, a (C₁-C₂₀) alkyl group or a (C₆-C₁₀) aryl group ;
B = a (C₆-C₂₄) aryldiradical or a (C₂-C₂₄) alkyldiradical;
R¹, R², R³, R⁴, R⁵ and R⁶ may, independently of one another, be chosen from the group of H, (C₆-C₁₀) aryl groups or (C₁-C₈) alkyl groups ;
R⁷ and R⁸ may, independently of one another, be chosen from the group of amine substituted (C₁-C₂₈) alkyl groups and n = 1-4.

Preferably, n = 1.

R⁷ and R⁸ may be dimethylaminopropyl groups which may be optionally quaternised.

Radiation-curing preferably takes place by means of, for example, a photochemical process such as, for example, ultraviolet radiation (UV) or a radiation-chemical process such as electron beam (EB).

UV and EB radiation are explained in greater detail by for example Bett et al. in the article entitled "UV and EB curing" (Jocca 1990 (11), pages 446 - 453).

The composition according to the invention can be used, for example, in the technical fields of coatings, of inks and of adhesives.

If desired and depending on the application, the compound according to the invention can also comprise additional oligomers or monomers which are based, for example, on (meth)acrylate units, maleate units, fumarate units, itaconate units, vinylester units and/or vinylether units.

After curing the coatings according to the invention have many desired properties such as for example good chemical properties (resistance to solvents, acids, alkalis and moisture), good optical properties and appearance, good mechanical properties (such as hardness, flexibility, adhesion, abrasion resistance, strength and durability), good thermal stability and good weatherability.

The composition according to the invention results in excellent drying properties.

The composition comprising the radiation curable binder composition may further comprise pigments, stabilisers and other additives.

A radiation curable formulation generally consists of a prepolymer, a reactive diluent and additives.In the case of a water-based radiation curable composition the prepolymer is dissolved or emulsified in water. Other possible components, depending upon the type of formulation and cure mechanism include for example pigment(s) and photoinitiator(s).

The most preferred irradiation source is ultraviolet light. Ultraviolet light is preferably high intensity light to provide a dosage to achieve reasonable curing rates. In the event that lower energy light is to be applied, it may then be desired to subject the compositions also to elevated temperatures in order to reduce the time for adequate polymerization to occur.

With respect to UV curing equipment we refer to, for example, pages 161-234 of Chemistry and Technology of UV and EB-formulations, Volume 1, Oldring, 1991.

Suitable lamps employed to provide the desired high intensity and availability of wavelength and spectral distribution include for example that available from Fusion Systems, Corp.

A composition according to the present invention can be applied on substrates such as, for example, plastic, paper, board, leather, glass, wood and metal.

The composition may be polymerised in the presence of a photoinitiator (UV-curing) and may be polymerised in the absence of a photoinitiator (EB-curing)

EB-curing is a process where high velocity electrons are absorbed by properly formulated ink, coating or adhesive compositions, resulting in the production of free radicals. These radicals are generated throughout the formulation and initiate a rapid polymerization or curing process.

Photoinitiators are the chemical compounds responsible for harnessing UV-light to generate free radicals that start the polymerisation/cure process. Initiating radicals can be generated from photoinitiators directly (Type I) or indirectly (Type II)

Type I photoinitiators undergo fragmentation upon irradiation. Examples are Type I photoinitiators undergo fragmentation upon irradiation. Examples are derivatives of benzoin, benzilketals, O-acyl 2-oxaminoketones and acylphoshine oxides.

A characteristic reaction for type II photoinitiators is H abstraction; they do not produce radicals which are capable of initiating polymerisation. Synergists , for example, amines are used as hydrogen donor and a potent initiating radical is generated. Suitable examples are aromatic ketones (benzophenone), aromatic 1,2-diketones (benzil), ketocoumarins, maleimides and thiol-ene systems Suitable photoinitiators allow for initiation of the curing process with exposure to light having wavelengths between about 200 nm and about 600 nm.

Suitable examples of photoinitiators or combination of photoinitiators are Darocur 1173® (Ciba) which is a suitable benzyl-ketal-based photoinitiator, which contains 2-hydroxy-2-methyl-1-phenylpropane-1-one as an active component; Irgacure 184® (Ciba) being an aryl ketone containing hydroxycyclohexyl phenyl ketone as active component, and Irgacure 369® (active component 2-benzyl-2-dimethylaminol-1- (4-morpholinophenyl)-butanone-1).

Acyl phosphines, such as for example 2,4,6, -trimethylbenzoyl diphenyl phosphone oxide (Lucerine TPO® , BASF) can also be used, as can Quantacure CPTX® (Octel Chemicals), which contains 1-chloro-4-propoxy thioxanthone as active component.
A suitable combination of photoinitiators is Irgacure 1800™ (Ciba) consisting of 75% by weight Irgacure 184™ and 25% by weight (bis-(2,6-dimethoxy benzoyl)-2,4,4-trimethylpentyl fosfine oxide).

Other suitable photoinitiators can be of the Norrish-II-type, for example, the combinations benzophenone with amine, maleimide with amine, thioxantone with amine and antrachinon with amine.

The invention is explained by reference to the following non-restrictive examples.

### Experiment I

### Synthesis of a compound having formula (I)

A reaction mixture consisting of 20.1 gram of hydroxy ethyl methacryl amide, 40.3 gram of 2-ethylhexyl acrylate, 40.0 gram of isodecyl acrylate and 6.2 gram of tert-butylperoxy-2-ethylhexanoate was slowly added during 2.5 hours to 140 grams of heated butanone in a roundbottom flask equipped with stirrer, reflux condenser, thermometer and nitrogen inlet, at reflux. Subsequently a solution of 2.6 gram tert-butylperoxy-2-ethylhexanoate in 29.1 gram butanone was added over a period of 1 hour. Charcoal was added to the hot polymer solution and the solution was filtered over Celite® 521. After evaporation of the solvent an hydroxy amid functional polymer with an hydroxy value of 30 meq KOH per gram was obtained. 10,4 grams of acryloylchloride were slowly added to a stirred solution of 100 grams of the hydroxy amid functional polymer prepared above and 12,4 grams of pyridine in 200 ml of dry tetrahydrofurane at 0-5°C. The temperature was maintained below 5°C. After the addition the temperature was slowly raised to roomtemperature and the reaction mixture was stirred at this temperature for 18 hours.

The reaction mixture was filtered to remove the pyridine-HCl salt, washed with a saturated sodium carbonate solution, washed with water, dried over sodium sulphate and subsequently the solvent was evaporated to yield an acrylic functional resin

### (resin I)

### Experiment II

### Synthesis of a compound having formula (I)

390 g molten hexahydro phtalic anhydride (60°C) were added to 455 g molten diisopropanol amine in a 1.5 1 reaction flask under nitrogen at 70°C. After the addition, which was followed by an exotherm reaction, the reaction temperature was raised to 180°C and the reaction mixture was stirred at 180°C for 3 hours. Subsequently the pressure was reduced from atmospheric to 20 mbar and the reaction was continued for one additional hour after which a hyperbranched polymer containing β-hydroxyamid endgroups with the following properties was obtained: Mn= 1160, dispersity D= 2.1, Tg= 57.5°C and a hydroxy value of 365 meq KOH per gram.

To this resin 446 g methacrylic acid and 0.4 g phenothiazine were added. Dry air was bubbled through the reaction mixture after which the reaction mixture was heated to 110°C for 6 hours. Subsequently the pressure was reduced to 20 mbar and a small amount of methacrylic acid was distilled off after which a methacylic functional polymer (resin II) with the following properties: Mn= 1800, D= 2.0, weight per unsaturation (wpu)= 260 and a hydroxy value of 60 meq KOH per gram was obtained.

### Example I

### Emulsification of resin I

95 gram of resin I , 2g of sodium laurylsulfate and 3g of nonylphenol 30eo were heated to 80°C. 100g of water was slowly added to the mixture while stirring. After adding the water a water white emulsion having a solids content of 50% was obtained.

### Example II

### Emulsification of resin II

95 gram of resin II and 5 g of Sodium laurylsulfate were heated to 80°C. 100g of water was slowly added to the mixture while stirring. After adding the water a water white emulsion having a solids content of 50% was obtained.

### Comparative Example A

95 gram epoxyacrylate (Ebecryl 3700™ ex UCB) and 5 g of sodium laurylsulfate were heated to 80°C. 100g of water was slowly added to the mixture while stirring. After adding the water a water white emulsion having a solids content of 50% was obtained.

### Example IV-V and Comparative Example B

An emulsions according to Examples I-II and A were mixed with Darocur 1173 (in parts by weight) as indicated in Table 1. The resulting products were applied on glass in a layer thickness of 100 um after which the physical and chemical drying properties were determined after 5 minutes drying at a temperature of 50°C and after 2 passes (under air conditions) of UV-radiation.The applied UV-equipment was an IST type 600 with a 1 mercury lamp medium pressure and a belt speed of 5,5 m/min. The radiation measured after 1 pass was 1 J/cm2.

**Table 1**

| | IV | V | B |
|---|---|---|---|
| Emulsion I | 200 | | |
| Emulsion II | | 200 | |
| Emulsion A | | | 200 |
| Darocur 1173 | 3 | 3 | 3 |
| Emulsion stability DSM WA 107 | + | ++ | + |
| Surface DSM WA 317 | Tacky | Tack free | Wet |
| UV-curing 2*1J/cm2 | + | + | + |
| | | | |
| Hardness DIN 53157/1-87 | Good | Very good | Very good |
| Chemical resistance DIN 53168/3-82 | Good | Very good | Very good |

Regarding these examples the compositions according to the invention result in improved drying properties whereas also coatings having good chemical resistance and hardness were obtained.

## Claims

1. A radiation curable composition comprising
a) a compound having at least one group derived from a carboxylic ester of a hydroxyalkylamide with an α, β-ethylenically unsaturated carboxylic acid and
b) water

2. A composition comprising
a) a compound having at least one group derived from a carboxylic ester of a hydroxyalkylamide with an α, β-ethylenically unsaturated carboxylic acid
b) water and
c) at least one surfactant and/or stabiliser.

3. A composition according to any one of claims 1-2 characterised in that compound a) has a molecular weight (Mw) higher than 1000.

4. A composition according to any one of Claims 1-3, characterized in that the compound a) is a radiation curable compound having formula (I): 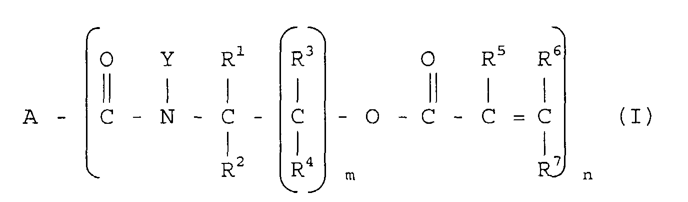 where:
A = monovalent or polyvalent organic group which is derived from a saturated or an unsaturated (C₁-C₆₀) alkyl group, or derived from an (C₆-C₁₀) aryl group or a polymer P,
Y = hydrogen, an (C₁-C₈) alkyl group or a group of the formula 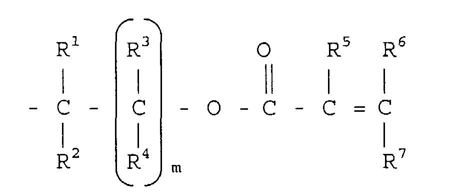
R¹, R², R³, R⁴ are, identical or different, hydrogen or a lineair, branched or cyclic (C₁-C₈) alkyl chain,
R⁵ = hydrogen, (C₁-C₅)alkyl, -CH₂OH or CH₂COOX,
R⁶,R⁷ = hydrogen, (C₁-C₈) alkyl, or COOX
X = hydrogen or (C₁-C₈) alkyl,
n = 2-1000 and
m = 1-4

5. A composition according to Claim 4, characterized in that Y is hydrogen or methyl, R¹, R², R³ and R⁴ are hydrogen or methyl, R⁵ is hydrogen or (m)ethyl and R⁶ and R⁷ are hydrogen.

6. A composition according to any one of Claims 3-5 characterized in that n=2-20 and m=1-2.

7. A coating obtained by radiation curing of a composition according to any one of Claims 1-6.

8. Entirely or partly coated substrate wherein a coating according to Claim 7 is applied as the coating.
